# EUROPEAN PATENT APPLICATION

(11) **EP 1 309 191 A2**
(43) Date of publication of application: **07.05.2003**
(21) Application number: 02023698.0
(22) Date of filing: 22.10.2002
(51) Int. Cl.: H04N 5/76

(54) **Information recording/reproducing apparatus**

(30) Priority: 23.10.2001 JP 2001325344
(71) Applicant: FUNAI ELECTRIC COMPANY LIMITED, Daito-shi, Osaka 574 (JP)
(72) Inventor: Hasegawa, Hiroshi, Daito-shi, Osaka (JP)
(74) Representative: Grünecker, Kinkeldey, Stockmair & Schwanhäusser Anwaltssozietät

(57) **Abstract**

If the current time is 10:00, when the user manipulates a recording switch (11) during a time shift operation for reproducing video data of a certain program at 9:30, retroactive by 30 minutes, a control unit (10) detects the manipulation on the recording switch during the time shift operation, and previously reserves in a recording region (3b) a transfer region (3c) to which recording data in a buffer region (3a) can be transferred by a portion corresponding to 30 minutes from the retroacted time, 9:30, to 10:00. Writing section (4) is controlled to start recording video data of the program from the current time 10:00 in the recording region (3b) consecutively to the transfer region (3c). After recording the data in the recording region (3b) from 10:00, a portion of recording data in the buffer region (3a) corresponding to 30 minutes from 9:30 to 10:00 is transferred back to the transfer region (3c).

## Description

### BACKGROUND OF THE INVENTION

The present invention relates to an information recording/reproducing apparatus which has a time shift reproducing function that can record input video data in a compressed format in a buffer region formed on a recording disk for recording a predetermined time of data, and simultaneously reproduce the recording data recorded in the buffer region retroactively by the predetermined time at maximum.

Conventionally, an information recording/reproducing apparatus having a time shift reproducing function (hereinafter called the "time shift function") can compress input video data comprised of television broadcast data received by a tuner, record the compressed input video data in a buffer region formed on a hard disk for recording a predetermined time of data, and reproduce the recording data recorded in the buffer region retroactively by the predetermined time at maximum. In this way, when one hour is set as a time shift-based reproducing time, for example, recording data can be reproduced retroactively to one hour before, wherein the retroactive time can be selected and set by the user as appropriate, for example, 30 minutes, one hour, two hours, three hours, and the like.

In addition, a recording switch may be manipulated to record a compressed data, which is compressed input video data (television broadcast data), as appropriate in a recording region formed on the hard disk.

As a specific example of an apparatus which has such a time shift function, the Unexamined Japanese Patent Application Publication No.Hei8-237592, for example, describes a real time video recording/reproducing apparatus which compresses a video signal by a compressing section to generate compressed data, stores the compressed data in a ring buffer, if a free capacity is available in the ring buffer, and releases the oldest one of compressed data stored in the ring buffer, if a sufficient free capacity is not available to ensure a free capacity to store the compressed data therein, thereby making it possible to play back and view a broadcast video at any time.

However, the information recording/reproducing apparatus having a time shift function as described above can only record video data at a current time onward even if the user makes a recording manipulation such as a manipulation on the recording switch during a time shift operation for recording data during the operation.

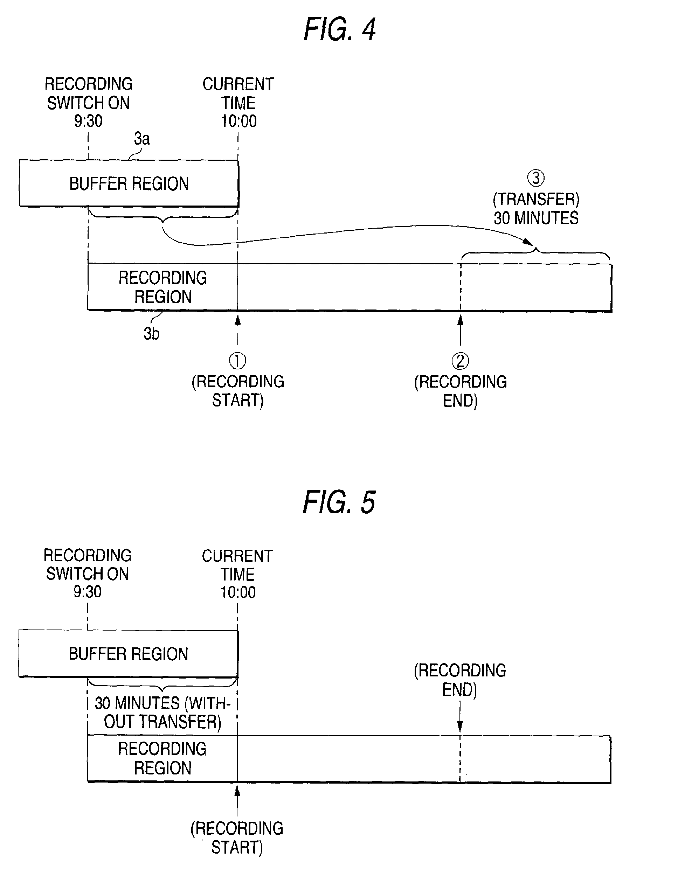

Specifically, as shown in Fig. 5, assume that the current time is at 10 o'clock at which the user is viewing video data at 8:30 retroactive to 30 minutes before, reproduced from the buffer region of the hard disk, and manipulates a recording switch for recording the video data at 80:30 for preservation at the time the video data is being reproduced. Conventionally, since the information recording/reproducing apparatus records only video data at 10 o'clock, the current time, onward in the recording region of the hard disk, the recording data in the buffer region for 30 minutes from 9:30 at which the user manipulated the recording switch, retroacted by the time shift, to 10:00, the current time, is not recorded in the recording region for preservation, causing a problem that the video data for that time drops from the recording region.

As described in the Unexamined Japanese Patent Application Publication No.Hei10-56620, there is a television receiver which permits the user to thoroughly view a plurality of problems from the beginning to the end such as an extended program and a program on another channel temporally overlapping therewith, a plurality of desired programs on a plurality of channels, and the like by starting recording a portion of video on another channel, which cannot be viewed simultaneously, by use of a ring buffer, and operating a read pointer at a speed higher than a write pointer during reproduction to achieve fast reproduction.

A play back function in the television receiver described in that official gazette refers to the ability to reproduce at all times a past broadcast signal away back from a current time by a fixed time period by recording a portion of a program on air as a moving image and reproducing the recorded portion in response to an instruction from a viewer. Though slightly different from the foregoing time shift reproduction which can only retroact to a limited time, the two functions are basically identical in that a video away back from a video at a current time can be reproduced for viewing. It is therefore contemplated that a similar problem to the foregoing could arise.

### SUMMARY OF THE INVENTION

It is therefore an object of the present invention to provide an information recording/reproducing apparatus which is capable of recording video data from a time at which a recording manipulation is made, even during time shift reproduction, to a current time in a recording region of a recording disk.

To achieve the above objects, the present invention is characterized by an information recording/reproducing apparatus for compressing input video data comprised of television broadcast data received by a tuner, and recording the compressed input video data in a recording region formed in a recording disk in response to a recording manipulation. The information recording/reproducing apparatus has a time shift reproducing function which can record the compressed input video data in a buffer region formed in the recording disk for recording a previously set predetermined time of data, and simultaneously reproduce recording data recorded in the buffer region retroactive to the predetermined time at maximum, wherein a control unit is provided for detecting a recording manipulation during the time shift reproducing operation, previously reserving in the recording region a transfer region capable of transferring a portion of recording data in the buffer region corresponding to a time period from a time retroacted by the time shift reproducing operation to a current time, starting recording the input video data in the recording region from the current time consecutively to the transfer region, and transferring a portion of the recording data in the buffer region corresponding to a time period from the time retroacted by the time sift reproducing operation to the current time back to the transfer region after recording the input video data in the recording region from the current time, wherein when the control unit detects another recording operation, based on a recording manipulation for recording input video data, which is being reproduced, during the time shift reproducing operation, for recording input video data different from the input video data, which is being recorded, the control unit transfers a portion of the recording data in the buffer region corresponding to a time period from a time retroacted by the time shift reproducing operation to the current time back to the transfer region after the other input video data is recorded in the recording region.

According to the foregoing configuration, as a recording manipulation is detected for recording data which is being reproduced during a time shift reproducing operation, a transfer region is formed in the recording region of the recording disk. After input video data from a current time is recorded in the recording region consecutively to the transfer region, a portion of recording data in the buffer region corresponding to a time period from a time retroacted by the time shift reproducing operation to the current time is transferred back to the transfer region, so that the portion of video data corresponding to the time period from the time retroacted by the time shift reproducing operation to the current time can be recorded in the recording region of the recording disk for preservation without dropping which would be conventionally experienced.

Moreover, upon detection of another recording manipulation for recording input video data different from the input video data, which is being recorded, based on a recording manipulation during the time shift reproducing operation, a portion of recording data in the buffer region corresponding to a time period from a time retroacted by the time shift reproducing operation to the current time is transferred back to the previously formed transfer region after the other input video data is recorded in the recording region, so that the input video data based on the other recording manipulation can be recorded without dropping.

Also, the present invention is characterized by an information recording/reproducing apparatus for compressing input video data comprised of television broadcast data received by a tuner, and recording the compressed input video data in a recording region formed in a recording disk in response to a recording manipulation. The information recording/reproducing apparatus has a time shift reproducing function which can record the compressed input video data in a buffer region formed in the recording disk for recording a previously set predetermined time of data, and simultaneously reproduce recording data recorded in the buffer region retroactive to the predetermined time at maximum, wherein a control unit is provided for detecting a recording manipulation during the time shift reproducing operation, and transferring a portion of recording data in the buffer region corresponding to a time period from the time retroacted by the time shift reproducing operation to the current time consecutively to the recording region after recording the input video data in the recording region after the current time, wherein when the control unit detects another recording operation, based on a recording manipulation for recording input video data, which is being reproduced, during the time shift reproducing operation, for recording input video data different from the input video data, which is being recorded, the control unit transfers a portion of the recording data in the buffer region corresponding to a time period from a time retroacted by the time shift reproducing operation to the current time consecutively to the recording region after the other input video data is recorded in the recording region.

According to the foregoing configuration, when the control unit detects a recording manipulation for recording data, which is being reproduced, during a time shift reproducing operation, a portion of recording data in the buffer region corresponding to a time period from a time retroacted by the time shift reproducing operation to a current time is transferred consecutively after input video data after the current time is recorded in the recording region, so that the portion of video data corresponding to the time period from the time retroacted by the time shift reproducing operation to the current time can be recorded in the recording region of the recording disk for preservation without dropping which would be conventionally experienced.

Moreover, when the control unit detects another recording manipulation for recording input video data different from the input video data, which is being recorded, based on a recording manipulation during the time shift reproducing operation, a portion of recording data in the buffer region corresponding to a time period from a time retroacted by the time shift reproducing operation to the current time is transferred after the other input video data is recorded in the recording region, so that the input video data based on the other recording manipulation can be recorded without dropping.

Furthermore, when the transfer region is formed before recording input video data after the current time, the transfer region must be provided with a margin such that a portion of recording data in the buffer region corresponding to a time period from the time retroacted by the time shift reproducing operation to the current time can be transferred with suffice. On the other hand, when the portion of the recording data in the buffer region corresponding to the time period from the time retroacted by the time shift reproducing operation to the current time is transferred consecutively to the input vide data at the current time onward, such a margin is not needed, so that the recording region can be effectively utilized.

Also, the present invention is characterized by an information recording/reproducing apparatus having a time shift reproducing function which can record compressed input video data in a buffer region formed in the recording disk for recording a previously set predetermined time of data, and simultaneously reproduce recording data recorded in the buffer region retroactive to the predetermined time at maximum, for compressing and recording the input video data in a recording region formed in the recording disk in response to a recording manipulation. When a recording manipulation is performed for recording data which is being reproduced during the time shift reproducing operation, a portion of recording data in the buffer region corresponding to a time period from a time retroacted by the time shift reproducing operation to a current time is transferred to the recording region after the input image data from the current time is recorded in the recording region.

According to the foregoing configuration, when a recording manipulation is performed for recording data, which is being reproduced, during a time shift reproducing operation for reproducing recording data recorded in the buffer region of the recording disk, a portion of the recording data in the buffer region corresponding to a time period from a time retroacted by the time shift reproducing operation to the current time is transferred to the recording region after input video data from the current time is recorded in the recording region of the recording disk. Thus, the portion of the video data corresponding to the time period from the time the recording manipulation was performed during the time shift reproducing operation to the current time can be recorded in the recording region of the recording disk for preservation without dropping which would be conventionally experienced.

Also, the present invention is characterized by comprising a control unit for detecting a recording manipulation during the time shift reproducing operation, previously reserving in the recording region a transfer region capable of transferring a portion of recording data in the buffer region corresponding to a time period from a time retroacted by the time shift reproducing operation to a current time, starting recording the input video data in the recording region from the current time consecutively to the transfer region, and transferring a portion of the recording data in the buffer region corresponding to a time period from the time retroacted by the time sift reproducing operation to the current time back to the transfer region after recording the input video data in the recording region from the current time.

According to the foregoing configuration, as the control unit detects a recording manipulation for recording data which is being reproduced during a time shift reproducing operation, a transfer region is formed in the recording region of the recording disk. After input video data from a current time is recorded in the recording region consecutively to the transfer region, a portion of recording data in the buffer region corresponding to a time period from a time retroacted by the time shift reproducing operation to the current time is transferred back to the transfer region, so that the portion of video data corresponding to the time period from the time retroacted by the time shift reproducing operation to the current time can be recorded in the recording region of the recording disk for preservation without dropping which would be conventionally experienced.

Also, the present invention is characterized by comprising a control unit for detecting a recording manipulation during the time shift reproducing operation, and transferring a portion of recording data in the buffer region corresponding to a time period from the time retroacted by the time shift reproducing operation to the current time consecutively to the recording region after recording the input video data in the recording region after the current time.

According to the foregoing configuration, when the control unit detects a recording manipulation for recording data, which is being reproduced, during a time shift reproducing operation, a portion of recording data in the buffer region corresponding to a time period from a time retroacted by the time shift reproducing operation to a current time is transferred consecutively after input video data after the current time is recorded in the recording region, so that the portion of video data corresponding to the time period from the time retroacted by the time shift reproducing operation to the current time can be recorded in the recording region of the recording disk for preservation.

Furthermore, when the transfer region is formed before recording input video data after the current time, the transfer region must be provided with a margin such that a portion of recording data in the buffer region corresponding to a time period from the time retroacted by the time shift reproducing operation to the current time can be transferred with suffice. On the other hand, when the portion of the recording data in the buffer region corresponding to the time period from the time the recording manipulation was detected to the current time is transferred consecutively to the input vide data at the current time onward, such a margin is not needed, so that the recording region can be effectively utilized.

Also, the present invention is characterized in that when the control unit detects another recording operation, based on a recording manipulation for recording input video data, which is being reproduced, during the time shift reproducing operation, for recording input video data different from the input video data, which is being recorded, the control unit transfers a portion of the recording data in the buffer region corresponding to a time period from a time retroacted by the time shift reproducing operation to the current time back to the transfer region after the other input video data is recorded in the recording region.

According to the foregoing configuration, as the control unit detects another recording manipulation for recording input video data different from the input video data, which is being recorded, based on a recording manipulation during the time shift reproducing operation, a portion of recording data in the buffer region corresponding to a time period from a time retroacted by the time shift reproducing operation to the current time is transferred back to the previously formed transfer region after the other input video data is recorded in the recording region, so that the input video data based on the other recording manipulation can be recorded without dropping.

Also, the present invention is characterized in that when the control unit detects another recording operation, based on a recording manipulation for recording input video data, which is being reproduced, during the time shift reproducing operation, for recording input video data different from the input video data, which is being recorded, the control unit transfers a portion of the recording data in the buffer region corresponding to a time period from a time retroacted by the time shift reproducing operation to the current time consecutively to the recording region after the other input video data is recorded in the recording region.

According to the foregoing configuration, as the control unit detects another recording manipulation for recording input video data different from the input video data, which is being recorded, based on a recording manipulation during the time shift reproducing operation, a portion of recording data in the buffer region corresponding to a time period from a time retroacted by the time shift reproducing operation to the current time is transferred after the other input video data is recorded in the recording region, so that the input video data based on the other recording manipulation can be recorded without dropping.

Further, when the transfer region is formed before recording input video data after the current time, the transfer region must be provided with a margin such that a portion of recording data in the buffer region corresponding to a time period from the time retroacted by the time shift reproducing operation to the current time can be transferred with suffice. On the other hand, when the portion of the recording data in the buffer region corresponding to the time period from the time retroacted by the time shift reproducing operation to the current time is transferred consecutively to the input vide data at the current time onward, such a margin is not needed, so that the recording region can be effectively utilized.

The present invention is characterized in that the input vide data is television broadcast data received by a tuner. According to the configuration as described, a desired television broadcast program can be reproduced with a time shift, and the program can be recorded from a desired point for preservation during the time shift reproduction.

### BRIEF DESCRIPTION OF THE DRAWINGS

Fig. 1 is a block diagram of one embodiment of this invention.
Fig. 2 is a diagram for explaining the operation of the embodiment of this invention.
Fig. 3 is a diagram for explaining the operation of the embodiment of this invention.
Fig. 4 is a diagram for explaining the operation of another embodiment of this invention.
Fig. 5 is a diagram for explaining the operation of a prior art example.

### DETAILED DESCRIPTION OF THE PREFERRED EMBODIMENTS

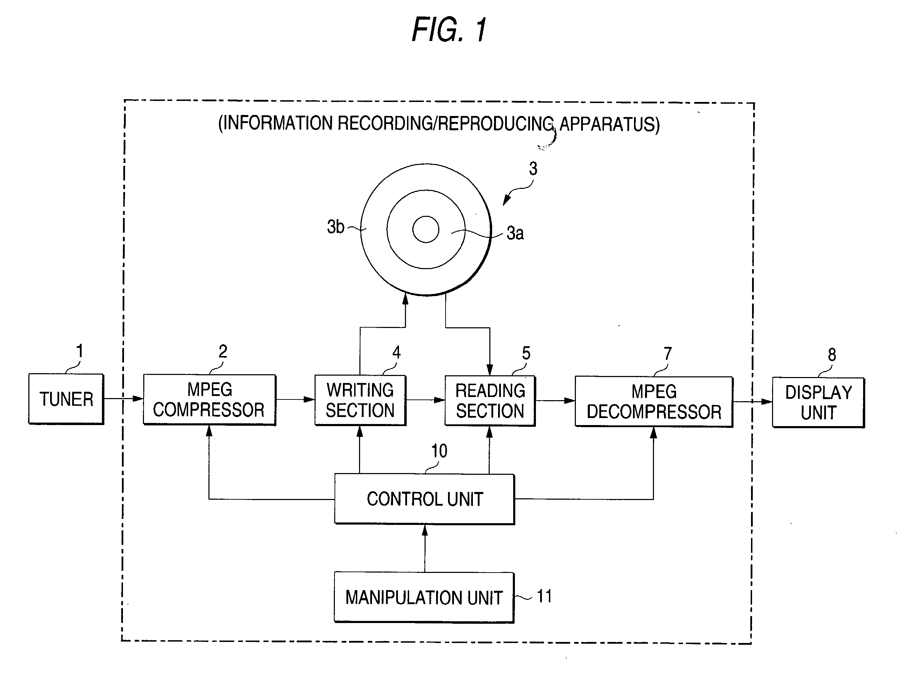

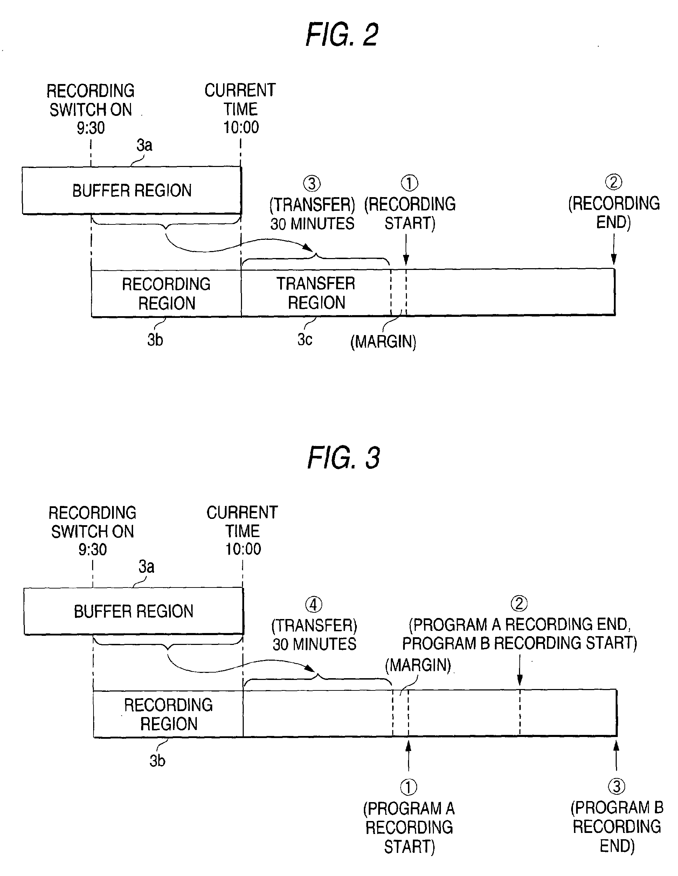

One embodiment of this invention will be described with reference to Figs. 1 through 3. Specifically, Fig. 1 is a block diagram while Figs. 2 and 3 are diagrams for explaining the operation.

An information recording/reproducing apparatus in this embodiment is configured, for example, as illustrated in Fig. 1. Specifically, the information recording/reproducing apparatus comprises a tuner 1 for receiving analog television broadcasting. Input video data comprised of television broadcast data received by the tuner 1 is inputted to an MPEG (Moving Picture Experts Group) compressor 2 which compresses the input video data to generate digital MPEG video data.

A hard disk 3, which is a recording disk, is formed with a buffer region 3a formed for recording a predetermined set time of data, and a recording region 3b. A writing section 4 records MPEG data provided by the MPEG compressor 2 in the buffer region 3a, while a reading section 5 reproduces data recorded in this buffer region 3a. Recording data in the buffer region 3a is reproduced retroactively by the set time at maximum. The video data reproduced by the reading section 5 is decompressed by an MPEG decompressor 7 and displayed on a display unit 8 comprised of a CRT or the like. In this way, a so-called time shift operation is implemented.

In this event, a time settable for the retroactive operation can be selected and set by the user, for example, through a manipulation on a selector switch, later described, such as 30 minutes, one hour, two hours, three hours, and the like. In this event, the hard disk 3 has a storage capacity of several tens of GB which is allocated to the buffer region 3a that occupies the capacity corresponding to the selected time, and to the recording region 3b that substantially occupies the remainder. As a guideline for the recording time, one hour corresponds to the capacity of approximately 2 GB.

Also, as illustrated in Fig. 1, the information recording/reproducing apparatus comprises a CPU-based control unit 10. As the control unit 10 receives a manipulation signal in accordance with a manipulated switch from a manipulation unit 11 which comprises a variety of manipulation switches such as a power switch, a recording switch, a reproduction switch, a REV switch, an FF switch, a time shift time selector switch, and the like, the control unit 10 controls associated components based on the manipulation signal.

Particularly, when the user manipulates the recording switch on the manipulation unit 11 during a time shift operation which is reproducing video data of a certain program retroactive to 9:30, 30 minutes away back from a current time, for example, 10:00, the control unit 10 detects that the recording switch is manipulated during the time shift operation, and previously reserves a transfer region 3c, in the recording region 3b, in which recording data in the buffer region 3a can be transferred corresponding to 30 minutes from 9:30 at which the recording switch was manipulated, retroacted by the action of the time shift, to the current time, i.e., 10:00, as shown in Fig. 2. Then, the control unit 10 controls the writing section 5 to start recording video data of an intended program from 10:00, which is the current time, in the recording region 3b subsequent to the transfer region 3c (① in Fig. 2). After recording the data from 10:00 in the recording region 3b (② in Fig. 2), the control unit 10 continuously controls the writing section 5 to transfer recording data in the buffer region 3a, corresponding to 30 minutes from 9:30 to 10:00, to the transfer region 3c (③ in Fig. 2).

In this event, the control unit 10 takes a margin in addition to the transfer region 3c for the capacity corresponding to 30 minutes, as the transfer region 3c for transferring recording data corresponding to 30 minutes from 9:30 at which the recording switch was manipulated, retroacted by the time shift, to 10:00, which is the current time, such that the recording data in the buffer region 3a for 30 minutes can be sufficiently transferred with an extra capacity.

In this way, as the control unit 10 detects a manipulation on the recording switch for recording video data of a program currently being reproduced during a time shift operation, the transfer region 3c is first formed in the recording region 3b of the hard disk 3. After the video data of the program is recorded in the recording region 3b from the current time (at 10:00) subsequent to the transfer region 3c, the recording data in the buffer region 3a corresponding to 30 minutes from 9:30 to 10:00 is transferred back to the transfer region 3c. Then, upon reproduction, the video data is reproduced sequentially from the start address in the transfer region 3c.

Also, when the recording switch is manipulated for recording video data of a program A under reproduction during a time shift operation to find another recording operation for recording video data of a program B different from the video data of the program A, which is being recorded, for example, an unattended recording operation of the other program B, based on this manipulation on the recording switch, the control unit 10 detects the other recording operation based on the manipulation on the recording switch, and continuously controls the writing section 5 to start recording the video data of the program A after 10:00 at the current time, i.e., 10:00 (① in Fig. 3), causing the writing section 5 to start recording the program B immediately after the program A is recorded (② in Fig. 3), as shown in Fig. 3.

In this way, the video data of the other program B is preferentially recorded in the recording region 3b, and after this record is terminated (③ in Fig. 3), a portion of recording data in the buffer region 3a corresponding to 30 minutes from 9:30 to 10:00 is transferred back to the transfer region 3c (④ in Fig. 3).

Thus, according to the foregoing embodiment, the portion of the video data corresponding to a time period from the time at which the recording switch was manipulated to the current time can be securely recorded in the recording region 3b of the hard disk 3 for preservation, retroacted by a time shift operation, without dropping, as before. As a result, the user, for example, can view all video data of a program desired for recording at a later time.

In addition, as the control unit 10 detects another recording manipulation for recording the video data of the different program B from the video data of the program A under recording (for example, unattended recording, selection of another channel, and manipulation on the recording switch) based on a manipulation on the recording switch during a time shift operation, the video data of the other program B is preferentially recorded in the recording region 3b. After the recording is completed, the control unit 10 returns to the previously formed transfer region 3c, and transfers the portion of the recording data in the buffer region 3a corresponding to the time period (30 minutes) from the time (9:30) the control unit 10 detects a manipulation on the recording switch to the current time (10:00), so that the video program of the other program B can be recorded without any drop based on the other recording manipulation.

Alternatively, as another embodiment of the present invention, as shown in Fig. 4, when the control unit 10 detects a manipulation on the recording switch during a time shift operation, the control unit 10 controls the writing section 5 to start recording a video data of an intended program from a current time, 10:00, onward in the recording region 3b (① in Fig. 4), and transfers a portion of recording data in the buffer region 3a corresponding to 30 minutes from 9:30 at which the manipulation on the recording switch was detected to 10:00 consecutively to the recording region 3b (③ in Fig. 4) after the video data of that program is recorded (② in Fig. 4). In this event, the transferred data in the recording region 3b is first reproduced, and then, the portion of the recording data in the recording region 3b after 10:00 is reproduced in a seamless manner.

By doing so, while the foregoing embodiment requires a margin as mentioned in the previously formed transfer region 3c such that a portion of recording data in the buffer region 3a corresponding to a time period (30 minutes) from the time (9:30) at which the manipulation on the recording switch was detected to the current time (10:00) can be transferred with suffice, as shown in Figs. 2, 3, such a margin need not be taken by transferring the recording data in the buffer region 3a consecutively to the video data of the program at the current time (10:00) onward, thereby making good use of the recording region 3b of the hard disk 3.

Further, in this event, when the recording switch is manipulated for recording video data of the program A under reproduction during a time shift operation, and the control unit 10 detects another recording operation (for example, unattended recording) for recording video data of a program B different from the video data of the program A being recorded based on the manipulation on the recording switch, the control unit 10 may preferentially record the video data of the other program B based on the unattended recording, and consecutively transfer recording data in the buffer region 3a to the recording region 3b after the completion of the recording based on the unattended recording.

In this way, the control unit 10 can record video data of a program different from video data of a program being recorded based on a manipulation on the recording switch during a time shift operation in the recording region 3b without dropping.

While in the respective embodiments described above, the hard disk 3 is used as a recording disk, the recording disk may be DVD-RW, DVD-RAM and the like.

Further, while in the respective embodiments described above, input video data is described as analog television broadcast data received by the tuner 1, input video data may of course be digital television broadcast data, and it goes without saying that the input video data may be analog or digital video data from other signal sources.

The present invention is not limited to the embodiments described above but may be changed in a variety of manners other than the foregoing without departing from the spirit and scope of the invention.

As described above, according to the invention described in aspect 1, after a transfer region is formed in the recording region of the recording disk, and input video data from a current time is recorded in the recording region consecutively to the transfer region, a portion of recording data in the buffer region corresponding to a time period from a time retroacted by the time shift reproducing operation to the current time is transferred back to the transfer region, so that the portion of video data corresponding to the time period from the time retroacted by the time shift reproducing operation to the current time can be recorded in the recording region of the recording disk for preservation without dropping which would be conventionally experienced.

Moreover, upon detection of another recording manipulation for recording input video data different from the input video data, which is being recorded, based on a recording manipulation during the time shift reproducing operation, a portion of recording data in the buffer region corresponding to a time period from a time retroacted by the time shift reproducing operation to the current time is transferred back to the previously formed transfer region after the other input video data is recorded in the recording region, thereby making it possible to record the input video data based on the other recording manipulation without dropping.

Also, according to the invention described in aspect 2, when the control unit detects a recording manipulation for recording data, which is being reproduced, during a time shift reproducing operation, a portion of recording data in the buffer region corresponding to a time period from a time retroacted by the time shift reproducing operation to a current time is transferred consecutively after input video data after the current time is recorded in the recording region, so that the portion of video data corresponding to the time period from the time retroacted by the time shift reproducing operation to the current time can be recorded in the recording region of the recording disk for preservation without dropping which would be conventionally experienced.

Moreover, when the control unit detects another recording manipulation for recording input video data different from the input video data, which is being recorded, based on a recording manipulation during the time shift reproducing operation, a portion of recording data in the buffer region corresponding to a time period from a time retroacted by the time shift reproducing operation to the current time is transferred after the other input video data is recorded in the recording region, so that the input video data based on the other recording manipulation can be recorded without dropping.

Furthermore, when the transfer region is formed before recording input video data after the current time, the transfer region must be provided with a margin such that a portion of recording data in the buffer region corresponding to a time period from the time retroacted by the time shift reproducing operation to the current time can be transferred with suffice. On the other hand, when the portion of the recording data in the buffer region corresponding to the time period from the time retroacted by the time shift reproducing operation to the current time is transferred consecutively to the input vide data at the current time onward, such a margin is not needed, so that the recording region can be effectively utilized.

Also, according to the invention described in aspect 3, when a recording manipulation is performed for recording data, which is being reproduced, during a time shift reproducing operation for reproducing recording data recorded in the buffer region of the recording disk, a portion of the recording data in the buffer region corresponding to a time period from a time retroacted by the time shift reproducing operation to the current time is transferred in the recording region after input video data from the current time is recorded in the recording region of the recording disk, thus making it possible to record the portion of the video data corresponding to the time period from the time the recording manipulation was performed during the time shift reproducing operation to the current time in the recording region of the recording disk for preservation without dropping which would be conventionally experienced.

Also, according to the invention described in aspect 4, as the control unit detects a recording manipulation for recording data, which is being reproduced, during a time shift reproducing operation, a transfer region is formed in the recording region of the recording disk. After input video data from a current time is recorded in the recording region consecutively to the transfer region, a portion of recording data in the buffer region corresponding to a time period from a time retroacted by the time shift reproducing operation to the current time is transferred back to the transfer region, thus making it possible to record the portion of video data corresponding to the time period from the time retroacted by the time shift reproducing operation to the current time in the recording region of the recording disk for preservation without dropping which would be conventionally experienced.

Also, according to the invention described in aspect 5, when the control unit detects a recording manipulation for recording data, which is being reproduced, during a time shift reproducing operation, a portion of recording data in the buffer region corresponding to a time period from a time retroacted by the time shift reproducing operation to a current time is transferred consecutively after input video data after the current time is recorded in the recording region, thus making it possible to record the portion of video data corresponding to the time period from the time retroacted by the time shift reproducing operation to the current time in the recording region of the recording disk for preservation.

Furthermore, when the transfer region is formed before recording input video data after the current time, the transfer region must be provided with a margin such that a portion of recording data in the buffer region corresponding to a time period from the time retroacted by the time shift reproducing operation to the current time can be transferred with suffice. On the other hand, when the portion of the recording data in the buffer region corresponding to the time period from the time the recording manipulation was detected to the current time is transferred consecutively to the input vide data at the current time onward, such a margin is not needed, so that the recording region can be effectively utilized.

Also, according to the invention described in aspect 6, as the control unit detects another recording manipulation for recording input video data different from the input video data, which is being recorded, based on a recording manipulation during the time shift reproducing operation, a portion of recording data in the buffer region corresponding to a time period from a time retroacted by the time shift reproducing operation to the current time is transferred back to the previously formed transfer region after the other input video data is recorded in the recording region, thus making it possible to record the input video data based on the other recording manipulation without dropping.

Also, according to the invention described in aspect 7, as the control unit detects another recording manipulation for recording input video data different from the input video data, which is being recorded, based on a recording manipulation during the time shift reproducing operation, a portion of recording data in the buffer region corresponding to a time period from a time retroacted by the time shift reproducing operation to the current time is transferred after the other input video data is recorded in the recording region, thus making it possible to record the input video data based on the other recording manipulation without dropping.

Further, when the transfer region is formed before recording input video data after the current time, the transfer region must be provided with a margin such that a portion of recording data in the buffer region corresponding to a time period from the time retroacted by the time shift reproducing operation to the current time can be transferred with suffice. On the other hand, when the portion of the recording data in the buffer region corresponding to the time period from the time retroacted by the time shift reproducing operation to the current time is transferred consecutively to the input vide data at the current time onward, such a margin is not needed, so that the recording region can be effectively utilized.

Also, according to the invention described in aspect 8, a desired television broadcast program can be reproduced with a time shift, and the program can be recorded from a desired point for preservation during the time shift reproduction.

## Claims

1. An information recording/reproducing apparatus for compressing input video data including television broadcast data received by a tuner, and recording the compressed input video data in a recording region formed in a recording disk in response to a recording manipulation,
said information recording/reproducing apparatus having a time shift reproducing function which can record the compressed input video data in a buffer region formed in said recording disk for recording a previously set predetermined time of data, and simultaneously reproduce recording data recorded in the buffer region retroactive to the predetermined time at maximum,
said information recording/reproducing apparatus comprising:
a compressing unit for compressing the input video data including television broadcast data, and
a control unit for detecting a recording manipulation during the time shift reproducing operation, previously reserving in the recording region a transfer region capable of transferring a portion of recording data in the buffer region corresponding to a time period from a time retroacted by the time shift reproducing operation to a current time, starting recording the input video data in the recording region from the current time consecutively to the transfer region, and transferring a portion of the recording data in the buffer region corresponding to a time period from the time retroacted by the time sift reproducing operation to the current time back to the transfer region after recording the input video data in the recording region from the current time, wherein
when said control unit detects another recording operation, based on a recording manipulation for recording input video data, which is being reproduced, during the time shift reproducing operation, for recording input video data different from the input video data, which is being recorded, said control unit transfers a portion of the recording data in the buffer region corresponding to a time period from a time retroacted by the time shift reproducing operation to the current time back to the transfer region after the other input video data is recorded in the recording region.

2. An information recording/reproducing apparatus for compressing input video data including television broadcast data received by a tuner, and recording the compressed input video data in a recording region formed in a recording disk in response to a recording manipulation,
said information recording/reproducing apparatus having a time shift reproducing function which can record the compressed input video data in a buffer region formed in said recording disk for recording a previously set predetermined time of data, and simultaneously reproduce recording data recorded in the buffer region retroactive to the predetermined time at maximum,
said information recording/reproducing apparatus comprising:
a compressing unit for compressing the input video data including television broadcast data, and
a control unit for detecting a recording manipulation during the time shift reproducing operation, and transferring a portion of recording data in the buffer region corresponding to a time period from the time retroacted by the time shift reproducing operation to the current time consecutively to the recording region after recording the input video data in the recording region after the current time, wherein
when said control unit detects another recording operation, based on a recording manipulation for recording input video data, which is being reproduced, during the time shift reproducing operation, for recording input video data different from the input video data, which is being recorded, said control unit transfers a portion of the recording data in the buffer region corresponding to a time period from a time retroacted by the time shift reproducing operation to the current time consecutively to the recording region after the other input video data is recorded in the recording region.

3. An information recording/reproducing apparatus comprising:
a compressing unit for compressing the input video data including television broadcast data, and
a control unit for detecting a recording manipulation during the time shift reproducing operation,
said information recording/reproducing apparatus having a time shift reproducing function which can record compressed input video data in a buffer region formed in a recording disk for recording a previously set predetermined time of data, and simultaneously reproduce recording data recorded in the buffer region retroactive to the predetermined time at maximum, for compressing and recording the input video data in a recording region formed in said recording disk in response to a recording manipulation, wherein
when a recording manipulation is performed for recording data which is being reproduced during the time shift reproducing operation, a portion of recording data in the buffer region corresponding to a time period from a time retroacted by the time shift reproducing operation to a current time is shifted to the recording region after the input image data from the current time is recorded in the recording region.

4. The information recording/reproducing apparatus according to claim 3, further comprising:
a control unit for detecting a recording manipulation during the time shift reproducing operation, previously reserving in the recording region a transfer region capable of transferring a portion of recording data in the buffer region corresponding to a time period from a time retroacted by the time shift reproducing operation to a current time, starting recording the input video data in the recording region from the current time consecutively to the transfer region, and transferring a portion of the recording data in the buffer region corresponding to a time period from the time retroacted by the time sift reproducing operation to the current time back to the transfer region after recording the input video data in the recording region from the current time.

5. The information recording/reproducing apparatus according to claim 3, further comprising:
a control unit for detecting a recording manipulation during the time shift reproducing operation, and transferring a portion of recording data in the buffer region corresponding to a time period from the time retroacted by the time shift reproducing operation to the current time consecutively to the recording region after recording the input video data in the recording region after the current time.

6. The information recording/reproducing apparatus according to claim 4, wherein
when said control unit detects another recording operation, based on a recording manipulation for recording input video data, which is being reproduced, during the time shift reproducing operation, for recording input video data different from the input video data, which is being recorded, said control unit transfers a portion of the recording data in the buffer region corresponding to a time period from a time retroacted by the time shift reproducing operation to the current time back to the transfer region after the other input video data is recorded in the recording region.

7. The information recording/reproducing apparatus according to claim 5, wherein
when said control unit detects another recording operation, based on a recording manipulation for recording input video data, which is being reproduced, during the time shift reproducing operation, for recording input video data different from the input video data, which is being recorded, said control unit transfers a portion of the recording data in the buffer region corresponding to a time period from a time retroacted by the time shift reproducing operation to the current time consecutively to the recording region after the other input video data is recorded in the recording region.

8. The information recording/reproducing apparatus according to claim 3, wherein
the input video data is television broadcast data received by a tuner.
